# EUROPÄISCHE PATENTSCHRIFT

(11) **EP 1 957 392 B1**
(45) Veröffentlichungstag und Bekanntmachung des Hinweises auf die Patenterteilung: **20.10.2010**
(21) Anmeldenummer: 06807568.8
(22) Anmeldetag: 26.10.2006
(51) Int. Cl.: B67D 1/08

(54) **AUSGABEGERÄT FÜR FLIEß- ODER SCHÜTTFÄHIGE GÜTER**
DISPENSING DEVICE FOR FREE-FLOWING OR POURABLE PRODUCTS
APPAREIL DISTRIBUTEUR POUR DES PRODUITS COULANTS OU EN VRAC

(30) Priorität: 30.11.2005 DE 102005057152
(43) Veröffentlichungstag der Anmeldung: 20.08.2008
(73) Patentinhaber: BSH Bosch und Siemens Hausgeräte GmbH, 81739 München (DE)
(72) Erfinder: BUCHSTAB, Martin, 73441 Bopfingen (DE); DUMKOW, Irene, 89567 Sontheim (DE); FEINAUER, Adolf, 89537 Giengen (DE); FLINNER, Klaus, 89447 Zöschingen (DE); HEGER, Bernd, 89437 Haunsheim (DE); NALBACH, Peter, 73230 Kirchheim/nabern (DE); YAZAN, Kasim, 89073 Ulm (DE)
(86) Internationale Anmeldenummer: PCT/EP2006/067801
(87) Internationale Veröffentlichungsnummer: WO 2007/062940

(56) Entgegenhaltungen:
- EP-A- 1 584 602
- US-A- 6 039 219
- US-A- 6 138 869

## Beschreibung

Die vorliegende Erfindung betrifft ein Ausgabegerät zur Ausgabe von fließ- oder schüttfähigen Gütern, insbesondere von gekühlter Flüssigkeit und/oder Eisstücken, gemäß dem Oberbegriff des Anspruchs 1, in einen Behälter. Ein Ausgabegerät ist zum Beispiel aus GB 2 401 169 A bekannt. Bei diesem Ausgabegerät ist eine Ausgabeöffnung im oberen Bereich einer Nische angeordnet, in der ein zu befüllender Behälter platziert werden kann. Am Boden der Nische befindet sich eine Schale, die zum Auffangen von verschüttetem Füllgut dient. Um die Schale entleeren und ggf. reinigen zu können, ist sie aus der Nische entnehmbar. Eine geeignete Form des zu befüllenden Behälters vorausgesetzt, kann sie auch als eine Abstellfläche für den Behälter während des Befüllens dienen.

Um beim Befüllen eines Behälters zu verhindern, dass Füllgut verspritzt, muss der obere Rand des Behälters möglichst nahe unter der Ausgabeöffnung platziert sein. Dann können Spritzer, die bei niedrigem Stand des Füllgutes im Behälter entstehen, diesen in der Regel nicht verlassen, und wenn der Füllgutstand hoch ist, ist gleichzeitig die Fallhöhe des Füllgutes so gering, dass sich kaum Spritzer bilden. Behälter, die zum Befüllen in der Nische abgestellt werden, müssen also sehr genau, sowohl in ihren seitlichen Abmessungen als auch in der Höhe, an die Nische angepasst sein, um sauber befüllt werden zu können. Alle anderen Behälter müssen freihändig unter die Ausgabeöffnung gehalten werden, doch dies erhöht wiederum die Gefahr des Verschüttens, wenn der Behälter nicht ruhig gehalten wird.

Die Druckschrift US 6,138,869 offenbart ein Ausgabegerät gemäß dem Oberbegriff des Anspruchs 1, mit einer Füllstation, welche eine Zwischenablage zur Aufnahme eines Getränkebehälters aufweist. Die Zwischenablage ist drehbar gelagert oder herausnehmbar.

Die Druckschrift EP 1 584 602 A1 offenbart einen Wasserspender mit einer drehbar gelagerten Wasserbehälteraufnahme.

Aufgabe der Erfindung ist, ein Ausgabegerät für fließ- oder schüttfähige Güter zu schaffen, das ein sauberes Befüllen von Behältern unterschiedlicher Abmessungen gestattet und das in dem Fall, dass dennoch Füllgut verschüttet wird, von einem Benutzer leicht zu reinigen ist.

Die Aufgabe wird gelöst durch ein Ausgabegerät gemäß Anspruch 1.

Bevorzugt ist das Abstellteil in seinen beiden Stellungen motorisch unter Zuhilfenahme eines Getriebes, insbesondere eines gleichmäßig übersetzenden Getriebes, wie z.B. eines Zahnradgetriebes, bringbar.

Je nach Stellung des Abstellteiles ist es somit möglich, Behälter mit einer an den ersten Abstand oder an den zweiten Abstand angepassten Höhe sicher zu befüllen. Falls dennoch Füllgut verschüttet wird, ist eine einfache Reinigung der gegeneinander beweglichen Teile dadurch gewährleistet, dass der Träger als Ganzes entnehmbar ist und außerhalb des Ausgabegerätes, z. B. unter fließend Wasser, gereinigt werden kann.

Eine Abstellfläche, die der Ausgabeöffnung in der zweiten Stellung gegenüberliegt, kann Teil des Basisteiles sein. Alternativ, vorzugsweise jedoch ergänzend dazu, liegt auch die erste Abstellfläche in der zweiten Stellung der Ausgabeöffnung gegenüber.

Einer bevorzugten Ausgestaltung zufolge ist an dem Abstellteil eine dritte Abstellfläche gebildet, die der Ausgabeöffnung in der zweiten Stellung zugewandt ist.

Um der Ausgabeöffnung je nach Stellung die erste oder die dritte Abstellfläche zuzuwenden, ist das Abstellteil vorzugsweise an das Basisteil angelenkt.

Vorzugsweise kleidet das Basisteil zumindest einen unteren Bereich der Nische aus. So wird verhindert, dass die Wände der Nische selbst im Betrieb bespritz werden, und der zum Reinigen der Nische erforderliche Arbeitsaufwand wird auf ein Minimum reduziert.

Das Trägerteil kann in der Nische durch Schienen geführt sein, die sich in der Entnahmerichtung des Trägerteiles erstrecken; alternativ oder ergänzend können das Trägerteil und die Nische einen Stift bzw. eine Buchse umfassen, die sich in der Entnahmerichtung des Trägerteiles erstrecken.

In beiden Fällen genügt ein einfacher, sich quer zur Entnahmerichtung des Trägerteiles erstreckender Stift, um das montierte Trägerteil in der Nische zu sichern.

Der Stift ist vorzugsweise unauffällig an einer in der ersten Stellung durch das Abstellteil verdeckten Stelle angebracht.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht eines Kältegerätes, das mit einem Ausgabegerät für Eis und gekühltes Wasser gemäß der vorliegenden Erfindung ausgestattet ist;
- Fig. 2: einen schematischen Schnitt durch eine Tür des Kältegerätes, in der das Ausgabegerät eingebaut ist;
- Fig. 3: eine perspektivische Ansicht des Basisteiles des Ausgabegerätes;
- Fig. 4: eine perspektivische Ansicht des Ausgabegerätes mit Träger in aufgeklappter Stellung; und
- Fig. 5: eine perspektivische Ansicht des Ausgabegerätes, aus dem der Träger entfernt ist.

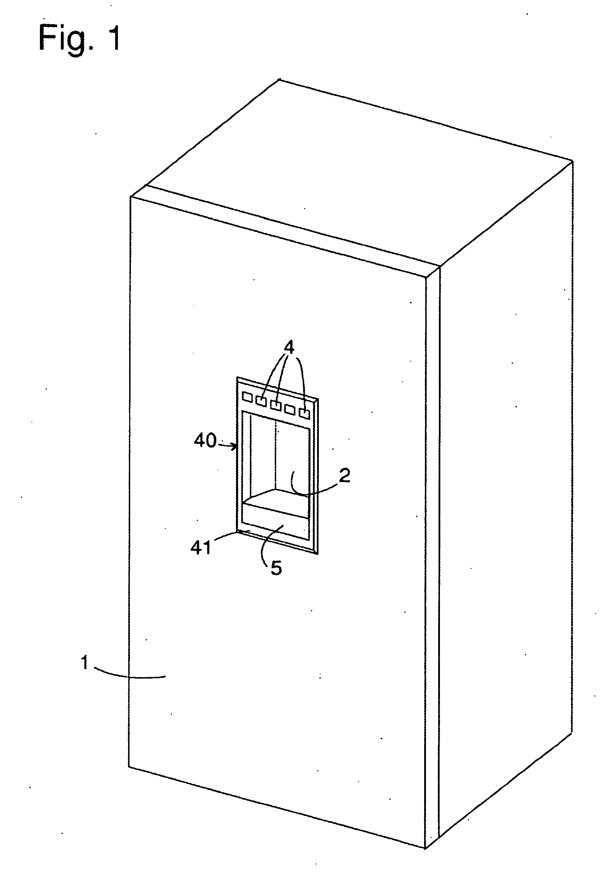

Fig. 1 ist eine perspektivische Ansicht eines Kältegeräts mit einer Tür 1, in der ein Ausgabegerät für Wasser und Eis montiert ist. In die Außenhaut der Tür 1 ist zentral ein Fenster geschnitten, in die ein nach vom offenes Kunststoffgehäuse 40 eingefügt ist. Das Gehäuse begrenzt eine Nische 2, in der oben eine in der Fig. nicht sichtbare Ausgabeöffnung für Wasser und Eis angebracht ist und in der ein zu befüllender Behälter platziert werden kann. Ein umlaufender Rahmen 41 des Gehäuses 40 verdeckt das Fenster. In einem oberen Bereich des Rahmens 41 ist ein Bedienfeld mit mehreren Tasten 4 gebildet. Ein unterer Bereich der Nische 2 ist von einem Träger 5 ausgefüllt, dessen Funktion weiter unten erläutert wird.

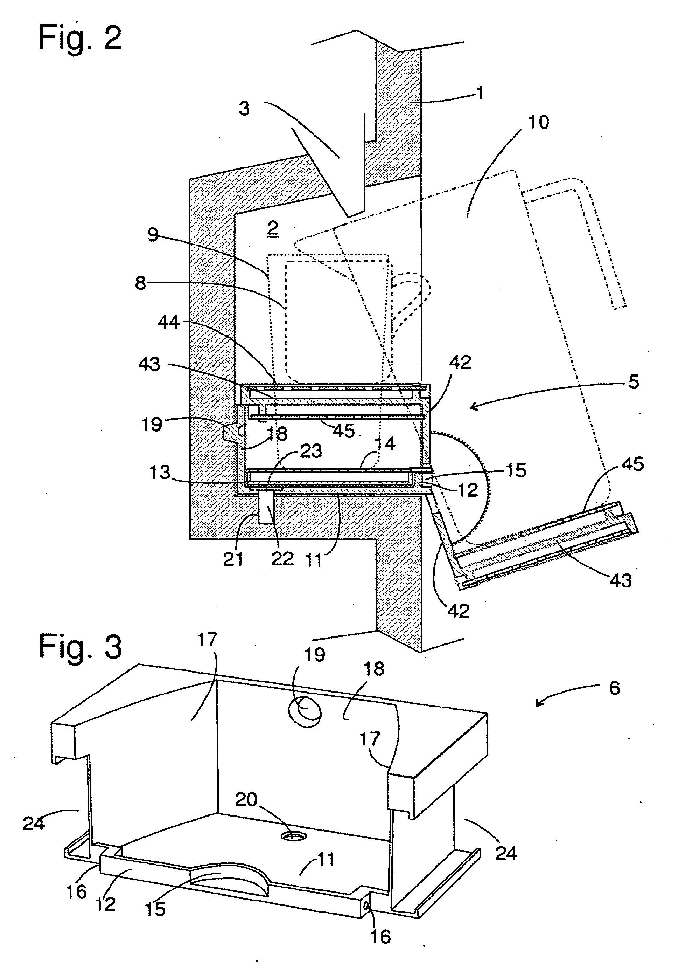

Fig. 2 zeigt einen Schnitt durch die Tür 1 in Höhe der Nische 2. Die Ausgabeöffnung für Eis und/oder gekühltes Wasser ist mit 3 bezeichnet.

Der Träger 5 umfasst zwei Teile, ein Basisteil 6 und ein Abstellteil 7, die um eine quer zur Schnittebene der Figur 1 ausgerichtete Achse gegeneinander schwenkbar sind. Fig. 2 zeigt das Abstellteil 7 gleichzeitig in zwei verschiedenen Anschlagstellungen seiner Schwenkbewegung, einer Ruhestellung, in welcher das Abstellteil 7 in die Nische 2 eintaucht, wie auch in Fig. 1 gezeigt, und einer ausgeklappten Stellung, in welcher sich das Abstellteil 7 außerhalb der Nische 2 befindet.

Das Abstellteil 7 ist im Querschnitt in etwa L-förmig, mit einer in der Ruhestellung vertikalen Frontplatte 42, die sich über die gesamte Breite der Nische 2 erstreckt, und einem rechtwinklig zur Frontplatte 42 orientierten, in der Ruhestellung horizontal in die Nische 2 eingreifenden und deren gesamte Querschnittsfläche ausfüllenden Tablett 43. Ober- und Unterseite des Tabletts 43 sind ausgehöhlt, und die Hohlräume sind jeweils durch einen an dem Tablett 43 lösbar eingerasteten Rost 44 bzw. 45 überdeckt. Auf dem oberen Rost 44 kann in der Ruhestellung ein Behälter von geringer Höhe, wie etwa eine gestrichelt dargestellte Tasse 8, in geringem Abstand von der Ausgabeöffnung 3 platziert werden.

In der ausgeklappten Stellung des Abstellteils 7 liegt das Basisteil 6 frei.

Fig. 3 zeigt eine perspektivische Ansicht des Basisteiles 6. Das Basisteil 6 hat in etwa die Form eines quaderförmigen Kastens mit offener Ober- und Vorderseite. Die Bodenplatte 11 des Kastens ist an der Vorderseite durch einen schmalen Steg 12 begrenzt, um eine flache Schale zu bilden, in der ein Tropfenfänger platzierbar ist. Der Tropfenfänger ist in Fig. 2 gezeigt. Er umfasst seinerseits eine flache Schale 13, deren offene Oberseite durch ein Rost 14 abgedeckt ist. In der Mitte des Steges 12 ist eine Einbuchtung 15 gebildet, über die ein Rand der Schale 13 vorsteht, so dass in der aufgeklappten Stellung des Trägers 5 der Tropfenfänger bequem entnommen und entleert werden kann.

In einem über die Vorderseite der Tür 1 vorspringenden Abschnitt des Steges 12 sind kollinear zwei Sackbohrungen 16 gebildet, die vorgesehen sind, um jeweils als Achse für die Schwenkbewegung des Abstellteiles 7 fungierende Wellenstücke aufzunehmen.

In der ausgeklappten Stellung ist ein mittelgroßer Behälter wie etwa ein Becher 9 in der Nische 2 unmittelbar auf dem Tropfenfänger des Basisteils 6 platzierbar, oder ein großer Behälter wie etwa ein Krug 10 ist auf dem in der aufgeklappten Stellung schräg nach oben gekehrten Rost 45 des Abstellteils 7 in einer Stellung platzierbar, in welcher die Öffnung des Kruges 10 in die Nische 2 eingreift, während sein Fuß außerhalb der Nische 2 auf dem Abstellteil 7 ruht. Die Höhe des Kruges kann daher um etwa die Höhe der Frontplatte 41 größer sein als die Höhe der Nische 2.

Seitenwände 17 und eine Rückwand 18 des Basisteiles 6 schirmen das Innere der Nische 2 vor Spritzern ab, die entstehen können, wenn in aufgeklappter Stellung des Abstellteiles 7 Füllgut verschüttet wird oder direkt von der Ausgabeöffnung 3 auf den Rost 14 tropft.

An der Rückwand 18 ist ferner ein Vorsprung 19 gebildet, der sich in Tiefenrichtung der Nische 2 erstreckt und in eine komplementäre Aussparung an der Rückwand der Nische 2 eingreift, wenn der Träger 5 korrekt in der Nische 2 platziert ist.

Bei korrekter Platzierung des Trägers 5 fluchtet ferner eine in der Bodenplatte 11 gebildete Öffnung 20 mit einer Aussparung 21 am Boden der Nische 2, so dass, wie in Fig. 1 gezeigt, ein Verriegelungsstift 22 durch die Öffnung 20 in die Aussparung 21 eingeführt werden kann. Der Verriegelungsstift 22 kann eine Schraube sein, die in ein Gewinde der Aussparung 21 eingreift, es kann sich aber auch um einen einfachen zylindrischen oder angespitzten Stift handeln, der zur leichteren Handhabung einen verbreiterten Kopf 23 trägt. Durch den Eingriff des Vorsprunges 19 und des Stiftes 22 in die jeweils zugeordneten Aussparungen der Nische 2 ist der Träger 5 in der Nische 2 unbeweglich verankert und dadurch in der Lage, in der aufgeklappten Stellung einen schweren Behälter wie den Krug 10 zu tragen, ohne aus der Nische 2 herauszufallen.

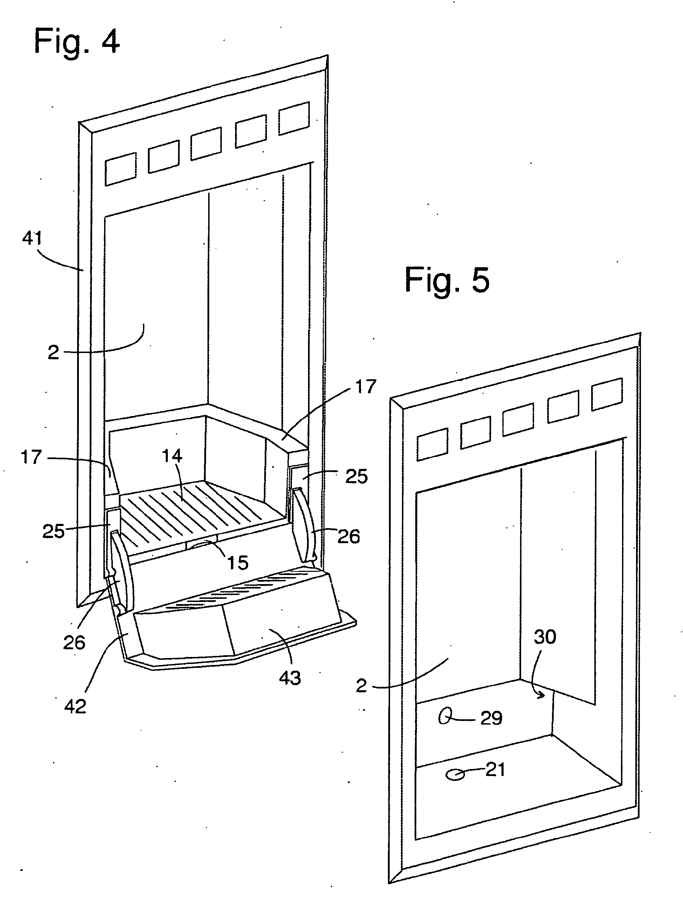

In den breiten Seitenwänden 17 des Basisteiles 6 sind Einsteckfächer 24 gebildet, die vorgesehen sind, um jeweils ein Mechanikmodul 25 (siehe Fig. 4) aufzunehmen. Die Mechanikmodule 25 enthalten im Inneren jeweils ein Zahnrad, das durch Reibung, durch ein Schwungrad oder dergleichen gebremst ist und mit einem Zahnradsegment 26 an der Frontplatte 42 des Abstellteiles 7 kämmt. Es kann auch jeweils eine Feder in den Mechanikmodulen 25 vorgesehen sein, die das Abstellteil 7 in Richtung seiner eingeklappten Stellung beaufschlagt und kräftig genug ist, um das Abstellteil 7 einzuklappen, wenn es nicht durch ein zu befüllendes Gefäß belastet ist.

Fig. 5 zeigt die Nische 2 ohne den Träger 5 darin. Man erkennt die Aussparung 22 am Boden der Nische 2 sowie die den Vorsprung 19 aufnehmende Aussparung an deren Rückwand, in der Fig. mit 29 bezeichnet. Zu sehen ist auch eine von zwei Aussparungen 30, die einander an den Seitenwänden der Nische 2 gegenüberliegen. Die Aussparungen 30 nehmen hintere Ecken der Seitenwände des Basisteils 6 auf und bilden so eine Schienenführung, in der das Basisteil in Tiefenrichtung der Nische verschiebbar geführt ist.

## Patentansprüche

1. Ausgabegerät für fließ- oder schüttfähige Güter, mit einer Ausgabeöffnung (3) für die Güter, die in einer Nische (2) an einer Frontseite des Geräts platziert ist, und mit einem aus der Nische (2) entnehmbaren, wenigstens eine erste Abstellfläche (44) für einen an der Ausgabeöffnung (3) zu befüllenden Behälter (8) aufweisenden Träger (5), **dadurch gekennzeichnet, dass** der Träger (5) ein in der Nische (2) lösbar verankertes Basisteil (6) und ein Abstellteil (7) umfasst, an dem die erste Abstellfläche (44) gebildet ist, und das mit dem Basisteil (6) zwischen einer ersten Stellung, in welcher die erste Abstellfläche (44) der Ausgabeöffnung (3) in einem ersten Abstand gegenüberliegt, und einer zweiten Stellung bewegbar verbunden ist, in der eine Abstellfläche (45, 14) der Ausgabeöffnung (3) in einem zweiten Abstand gegenüberliegt, der größer als der erste Abstand ist.

2. Ausgabegerät nach Anspruch 1, **dadurch gekennzeichnet, dass** der Ausgabeöffnung (3) in der zweiten Stellung eine zweite Abstellfläche (14) gegenüberliegt, die einen Teil des Basisteils (6) bildet.

3. Ausgabegerät nach Anspruch 1 oder 2, **dadurch gekennzeichnet, dass** der Ausgabeöffnung in der zweiten Stellung die erste Abstellfläche gegenüberliegt.

4. Ausgabegerät nach Anspruch 1 oder 2, **dadurch gekennzeichnet, dass** der Ausgabeöffnung (3) in der zweiten Stellung eine an dem Abstellteil (7) gebildete dritte Abstellfläche (45) zugewandt ist.

5. Ausgabegerät nach Anspruch 4, **dadurch gekennzeichnet, dass** das Abstellteil (7) an das Basisteil (6) angelenkt ist.

6. Ausgabegerät nach einem der vorhergehenden Ansprüche, **dadurch gekennzeichnet, dass** das Basisteil (6) zumindest einen unteren Bereich der Nische (2) auskleidet.

7. Ausgabegerät nach einem der vorhergehenden Ansprüche, **dadurch gekennzeichnet, dass** der Träger (5) in der Nische (2) durch Schienen (30) geführt ist, die sich in der Entnahmerichtung des Trägers (5) erstrecken, und durch einen quer zu der Entnahmerichtung einsteckbaren Stift (22) gesichert ist.

8. Ausgabegerät nach einem der vorhergehenden Ansprüche, **dadurch gekennzeichnet, dass** der Träger (5) und die Nische (2) einen Vorsprung (19) bzw. eine Aussparung (29) umfassen, die sich in der Entnahmerichtung des Trägers (5) erstrecken, und dass der Träger (5) durch einen quer zu der Entnahmerichtung einsteckbaren Stift (22) gesichert ist.

9. Ausgabegerät nach Anspruch 7 oder 8, **dadurch gekennzeichnet, dass** der Stift (22) in der ersten Stellung durch das Abstellteil (7) verdeckt ist.

10. Ausgabegerät nach Anspruch 1, **dadurch gekennzeichnet, dass** das Abstellteil (7) in seinen beiden Stellungen mittels eines Getriebes bringbar ist.

11. Ausgabegerät nach Anspruch 10, **dadurch gekennzeichnet, dass** das Getriebe als gleichmäßig übersetzendes Getriebe, insbesondere als Zahnradgetriebe ausgebildet ist.

12. Kältegerät mit einer Ausgabeeinheit nach einem der Ansprüche 1 bis 11.

## Claims

1. Dispensing apparatus for flowable or pourable materials, with a delivery opening (3) for the materials, which is placed in a niche (2) at a front side of the apparatus, and with a carrier (5) which is removable from the niche (2) and has at least one first support surface (44) for a container (8) to be filled at the delivery opening (3), **characterised in that** the carrier (5) comprises a base member (6), which is releasably fixed in the niche (2), and a support member (7), at which the first support surface (44) is formed and which is connected with the base member (6) to be movable between a first setting in which the first support surface (44) is disposed opposite the delivery opening (3) at a first spacing and a second setting in which a support surface (45, 14) is disposed opposite the delivery opening (3) at a second spacing greater than the first spacing.

2. Dispensing apparatus according to claim 1, **characterised in that** the delivery opening (3) in the second setting is disposed opposite a second support surface (14) forming a part of the base member (6).

3. Dispensing apparatus according to claim 1 or 2, **characterised in that** the delivery opening (3) in the second setting is disposed opposite the first support surface.

4. Dispensing apparatus according to claim 1 or 2, **characterised in that** the delivery opening (3) in the second setting faces a third support surface (45) formed at the support member (7).

5. Dispensing apparatus according to claim 4, **characterised in that** support member (7) is articulated to the base member (6).

6. Dispensing apparatus according to any one of the preceding claims, **characterised in that** the base member (6) covers at least a lower region of the niche (2).

7. Dispensing apparatus according to any one of the preceding claims, **characterised in that** the carrier (5) is guided in the niche (2) by rails (30), which extend in the removal direction of the carrier (5), and is secured by a pin (22) insertable transversely to the removal direction.

8. Dispensing apparatus according to any one of the preceding claims, **characterised in that** the carrier (5) and the niche (2) have a projection (19) and a cutout (29), respectively, which extend in the removal direction of the carrier (5) and that the carrier (5) is secured by a pin (22) insertable transversely to the removal direction.

9. Dispensing apparatus according to claim 7 or 9, **characterised in that** the pin (22) is covered in the first setting by the support member (7).

10. Dispensing apparatus according to claim 1, **characterised in that** the support member (7) can be brought into its two settings by means of a transmission.

11. Dispensing apparatus according to claim 10, **characterised in that** the transmission is constructed as a uniformly translating transmission, particularly as a gearwheel transmission.

12. Refrigerating appliance with a dispensing unit according to any one of claims 1 to 11.

## Revendications

1. Appareil distributeur pour des produits coulants ou en vrac, comprenant une ouverture de distribution (3) pour les produits, qui est placée dans une niche (2) sur un côté frontal de l'appareil, et comprenant un support (5) amovible de la niche (2), présentant au moins une première surface de pose (44) pour un récipient (8) à remplir à l'ouverture de distribution (3), **caractérisé en ce que** le support (5) comprend une pièce de base (6) fixée de manière amovible dans la niche (2) et une pièce de pose (7), sur laquelle la première surface de pose (44) est formée, et qui est raccordée à la pièce de base (6) de manière déplaçable entre une première position, dans laquelle la première surface de pose (44) est située à l'opposé de l'ouverture de distribution (3) avec un premier écart, et une deuxième position, dans laquelle une surface de pose (45, 14) est située à l'opposé de l'ouverture de distribution (3) avec un second écart qui est plus grand que le premier écart.

2. Appareil distributeur selon la revendication 1, **caractérisé en ce qu'**une deuxième surface de pose (14) est située à l'opposé de l'ouverture de distribution (3) dans la deuxième position, cette surface de pose formant une partie de la pièce de base (6).

3. Appareil distributeur selon la revendication 1 ou 2, **caractérisé en ce que** la première surface de pose est située à l'opposé de l'ouverture de distribution (3) dans la deuxième position.

4. Appareil distributeur selon la revendication 1 ou 2, **caractérisé en ce qu'**une troisième surface de pose (45) formée sur la pièce de pose (7) est tournée vers l'ouverture de distribution (3) dans la deuxième position.

5. Appareil distributeur selon la revendication 4, **caractérisé en ce que** la pièce de pose (7) est articulée sur la pièce de base (6).

6. Appareil distributeur selon l'une quelconque des revendications précédentes, **caractérisé en ce que** la pièce de base (6) recouvre au moins une zone inférieure de la niche (2).

7. Appareil distributeur selon l'une quelconque des revendications précédentes, **caractérisé en ce que** le support (5) est guidé dans la niche (2) par des rails (30) qui s'étendent dans le sens de retrait du support (5) et sont bloquées par une tige (22) enfichable transversalement au sens de retrait.

8. Appareil distributeur selon l'une quelconque des revendications précédentes, **caractérisé en ce que** le support (5) et la niche comprennent une saillie (19) resp. un évidement (29) qui s'étendent dans le sens de retrait du support (5), et **en ce que** le support (5) est bloqué par une tige (22) enfichable transversalement au sens de retrait.

9. Appareil distributeur selon la revendication 7 ou 8, **caractérisé en ce que** la tige (22) est recouverte par la pièce de pose (7) dans la première position.

10. Appareil distributeur selon la revendication 1, **caractérisé en ce que** la pièce de pose (7) peut être mise dans ses deux positions au moyen d'un engrenage.

11. Appareil distributeur selon la revendication 10, **caractérisé en ce que** l'engrenage est réalisé en tant qu'engrenage à multiplication régulière, notamment en tant qu'engrenage à roue dentée.

12. Appareil frigorifique comprenant une unité de distribution selon l'une quelconque des revendications 1 à 11.
